# EUROPÄISCHE PATENTSCHRIFT

(11) **EP 0 390 747 B1**
(45) Veröffentlichungstag und Bekanntmachung des Hinweises auf die Patenterteilung: **11.08.1993**
(21) Anmeldenummer: 90810241.1
(22) Anmeldetag: 26.03.1990
(51) Int. Cl.: F16L 33/207, F16L 37/12, F16L 37/02, F16L 13/14

(54) **Abdichtende Verbindung von insbesondere mehrschichtigen Kunststoffrohren**
Sealing connection for multilayer plastic pipes
Raccord étanche, notamment pour tuyaux à plusieurs couches en matière plastique

(30) Priorität: 31.03.1989 CH 1176/89
(43) Veröffentlichungstag der Anmeldung: 03.10.1990
(73) Patentinhaber: Geberit AG, CH-8645 Jona (CH)
(72) Erfinder: Dolder, René, CH-8645 Jona (CH); Gübeli, Albert, CH-8645 Jona (CH)
(74) Vertreter: Groner, Manfred

(56) Entgegenhaltungen:
- EP-A- 0 073 048
- EP-A- 0 091 254
- CH-A- 664 812
- GB-A- 939 423
- GB-A- 2 121 705
- US-A- 4 522 435
- US-A- 4 881 760

## Beschreibung

Die Erfindung betrifft eine Verbindung nach dem Oberbegriff des Patentanspruchs 1.

Eine Verbindung dieser Art ist durch die US-A-4,522,435 bekannt geworden. Diese zeigt eine Verbindung von einem mehrschichtigen Verbundrohr mit einem zylindrischen Anschlussteil. Zusätlich zum Anschlussteil ist eine Hülse erforderlich, die verpresst ist. Auf der Aussenseite weist das Anschlussteil zwei umlaufende Rippen auf, über denen die Hülse und das Rohr verpresst sind. Eine für die Hausinstallation geeignete Verbindung solcher Rohre untereinander und mit Anschlussteilen muss eine andauernde und völlige Dichtigkeit gewährleisten. Die Verbindung soll auch bei ungünstigen Sichtmöglichkeiten in einfacher Weise und schnell herzustellen sein und sie soll zudem sofort dicht sein. Laufende Kontrollen bezüglich der Dichtigkeit sollen bei einer solchen Verbindung nicht erforderlich sein. Die bekannten Schraub- und Baionettverbindungen sind hier insbesondere deshalb nicht geeignet, da sie aus meist vielen Teilen bestehen und teuer sind.

Der Erfindung liegt die Aufbabe zugrunde, eine Verbindung der gennanten Art zu schaffen, die den oben aufgeführten Anforderungen genügt, und die dennoch kostengünstiger und einfacher erstellt werden kann.

Die Aufgabe ist durch die Erfindung gemäss Anspruch 1 gelöst. Vorteilhafte Weiterbildungen ergeben sich aus den abhängigen Ansprüchen.

Ausführungsbeispiele der Erfindung werden nachfolgend anhand der Zeichnungen näher erläutert. Es zeigen:
Fig. 1a und 1b je einem Längsschnitt durch einen Teil einer erfindungsgemässen Verbindung, vor und nach dem Verpressen,
Fig. 2a und 2b je einen Längsschnitt durch eine weitere Ausführung der Verbindung, vor und nach dem Verpressen, und
Fig. 3 einen Längsschnitt durch eine weitere Ausführung einer erfindungsgemässen Verbindung.

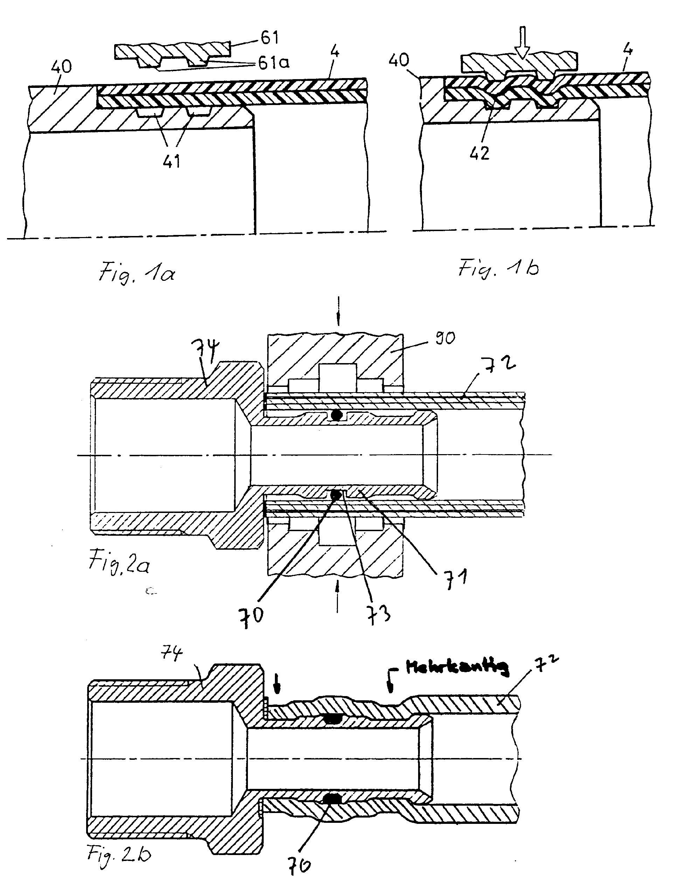

Die Fig. 1a und 1b zeigen ein vorzugsweise aus Metall hergestelltes Anschlussteil 40 das auf der Aussenseite zwei umlaufende, parallele und im Abstand angeordnete Furchen 41 aufweist. Ein auf den Anschluss 43 aufgeschobenes Rohr 4 wird mit einem Zangenförmigen Werkzeug 61 verformt, das Vorsprünge 61a aufweist, die komplementär zu den Furchen 41 ausgebildet sind. Das Rohr 4 ist ein Verbundrohr und behält nach dem Entfernen des Werkzeuges 61 die in die Furchen 41 eingreifenden Sicken 42 dauernd bei.

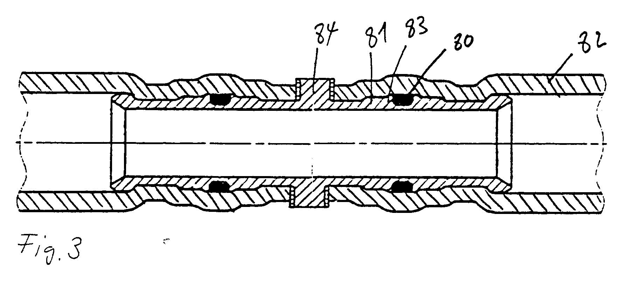

Bei zwei Ausführungen nach den Fig. 2a, 2b und 3 ein Dichtungsring 70 bzw. 80 in eine Rille 73 bzw. 83 einer Erhöhung 71 bzw. 81 eingelegt. Das Verbundrohr 72 bzw. 82 wird mit seinem einen Ende auf das Anschlussteil 74 bzw. 84 aufgeschoben und vor sowie nach der Erhöhung 71 bzw. 81 mit einer Zange 90 verpresst. Die Zange 90 ist so ausgebildet, dass das Verbundrohr 72 bzw. 82 vor dem Dichtungsring 70 bzw. 80 achtkantig und nach dem Dichtungsring radial verpresst wird. Durch die Verpressung entstehen somit im Verbundrohr jeweils mehrkantige Vertiefungen 85 bzw. 86 und kreisförmige Vertiefungen 87 bzw. 88 womit ein besonders fester Halt des Verbundrohres auf dem Anschlussteil erreicht wird. Wie die Fig. 3 zeigt, kann die Verbindung auch mit doppeltem Anschluss ausgebildet sein.

Aus obigen Angabe ergeben sich somit Verbindungen, die mit verhältnismässig wenigen, einfachen und robusten Bauteilen realisierbar sind. Die Verbindungen sind aufgrund ihrer einfachen und robusten Ausführbarkeit kostenmässig günstig und betrieblïch äusserst zuverlässig.

## Patentansprüche

1. Abdichtende Verbindung von einem mehrschichtigen Verbundrohr (4,72,82) mit einem zylindrischen Anschlussteil (40,74,84), mit dem des aufgeschobene Verbundrohr (4,72,82) unlösbar und starr verbunden ist, wobei das Anschlussteil (40,74,84) einen umlaufenden Anschlag für die Stirnfläche das angeschlossenen Verbundrohres (4,72,82) sowie vor dem Anschlag mindestens eine umlaufende Rille (41) oder Erhöhung (71,81) aufweist und wobei das Verbundrohr (4,72,82) im wesentlichen bis zum Anschlag auf das Anschlussteil (40,74,84) aufgeschoben und vor dem Anschlag verformt ist, dadurch gekennzeichnet, dass das Verbundrohr (4,72,82) entsprechend der Rille (41) bzw. Erhöhung (71,81) dauerhaft verformt und verpresst ist und die Verformung des Verbundrohres (4,72,82) auch aussenseitig der Kontur des Anschlussteils (40,74,84) entspricht, wobei eine Verbindung ausgenommen ist, welche Klemmittel wie z.B. Hülsen oder Ringe aufweist.

2. Verbindung nach Anspruch 1, dadurch gekennzeichnet, dass die Erhöhung (71,81) eine Rille (73,83) aufweist, in die ein Dichtungsring (70,80) eingelegt ist.

3. Verbindung nach Anspruch 1 oder 2, dadurch gekennzeichnet, dass das Verbundrohr (72,82) zum Rohrende hin vor der Erhöhung (71,81) mehrkantig und nach der Erhöhung (71,81) radial verpresst ist.

4. Verbindung nach Anspruch 1, dadurch gekennzeichnet, dass das Anschlussteil (40) zwei im Abstand zueinander angeordnete Rillen (41) aufweist, in welche das Verbundrohr eingepresst ist.

5. Verbindung nach Anspruch 1, dadurch gekennzeichnet, dass das Verbundrohr (72,82) auf seiner Aussenseite mehrkantige Vertiefungen (85,86) und kreisförmige Vertiefungen (87,88) aufweist.

## Claims

1. Sealing connection for a multi-layered composite tube (4, 72, 82) having a cylindrical connection piece (40, 74, 84), with which the composite tube (4, 72, 82), which is pushed over the connection piece (40, 74, 84), is non-releasably and rigidly connected, wherein the connection piece (40, 74, 84) comprises a circumferential stop for the front face of the connected composite tube (4, 72, 82) as well as at least one circumferential groove (41) or elevated region (71, 81) in advance of the stop and wherein the composite tube (4, 72, 82) is pushed onto the connection piece (40, 74, 84) substantially as far as the stop and is shaped in advance of the stop, characterised in that the composite tube (4, 72, 82) is permanently shaped and compressed corresponding to the groove (41) and/or elevated region (71, 81) and the shaping of the composite tube (4, 72, 82) also corresponds on the external side to the contour of the connection piece (40, 74, 84), wherein a connection is provided, which comprises clamping means such as, for example, sleeves or rings.

2. Connection according to claim 1, characterised in that the elevated region (71, 81) comprises a groove (73, 83), into which a sealing ring (70, 80) is inserted.

3. Connection according to claim 1 or 2, characterised in that the composite tube (72, 82) is multi-sided towards the tube end in advance of the elevated region (71, 81) and is radially compressed after the elevated region (71, 81).

4. Connection according to claim 1, characterised in that the connection piece (40) comprises two grooves (41) which are spaced apart and the composite tube is pressed into these grooves.

5. Connection according to claim 1, characterised in that the composite tube (72, 82) comprises multi-sided recesses (85, 86) and circular recesses (87, 88) on its external side.

## Revendications

1. Connexion étanche entre un tuyau composite à plusieurs couches (4, 72, 82) et un élément de jonction cylindrique (40, 74, 84), auquel le tuyau composite (4, 72, 82), enfilé sur l'élément de jonction, est assemblé de manière inamovible et inflexible, l'élément de jonction (40, 74, 84) présentant une butée entourante pour la face frontale du tuyau composite raccordé (4, 72, 82), ainsi qu'au moins une gorge entourante (41) ou bossage entourant (71, 81) avant la butée, et le tuyau composite (4, 72, 82) étant enfilé sensiblement jusqu'à la butée sur l'élément de jonction (40, 74, 84) et étant déformé avant la butée, **caractérisée** en ce que le tuyau composite (4, 72, 82) subit une déformation ou compression permanente correspondant à la gorge (41) ou, selon le cas, au bossage (71, 81), et la déformation du tuyau composite (4, 72, 82) correspond également, sur le côté extérieur, au contour de l'élément de jonction (40, 74, 84), cette connexion ne présentant pas de moyens de serrage tels, par exemple, que des douilles ou des bagues.

2. Connexion selon la revendication 1, **caractérisée** en ce que le bossage (71, 81) présente une gorge (73, 93), dans laquelle est inséré un joint annulaire d'étanchéité (70, 80).

3. Connexion selon la revendication 1 ou 2, **caractérisée** en ce que le tuyau composite (72, 82) est, vers son extrémité, comprimé polygonalement avant le bossage (71, 81) et radialement après le bossage (71, 81).

4. Connexion selon la revendication 1, **caractérisée** en ce que l'élément de jonction (40) présente deux gorges (41) disposées à distance l'une de l'autre, dans lesquels est pressé le tuyau composite.

5. Connexion selon la revendication 1, **caractérisée** en ce que le tuyau composite (72, 82) présente, sur son côté extérieur, des enfoncements polygonaux (85, 86) et des enfoncements circulaires (87, 88).
